# FASCICULE DE BREVET EUROPEEN

(11) **EP 2 102 269 B1**
(45) Date de publication et mention de la délivrance du brevet: **13.06.2012**
(21) Numéro de dépôt: 07856493.7
(22) Date de dépôt: 10.12.2007
(51) Int. Cl.: C08G 73/16, C09D 179/08, C08L 79/08, H01B 3/42, C08G 63/685

(54) **RESINES POLYESTERS INSATURES FONCTIONNALISES PAR IMIDES CYCLOALIPHATIQUES INSATUREES, POUR REVETEMENT ET COMPOSITIONS DE MOULAGE**
MIT UNGESÄTTIGTEN CYCLOALIPHATISCHEN IMIDEN FUNKTIONALISIERTE UNGESÄTTIGTE POLYESTERHARZE FÜR BESCHICHTUNGS- UND FORMMASSEN
UNSATURATED POLYESTER RESINS FUNCTIONALISED BY UNSATURATED CYCLOALIPHATIC IMIDES FOR COATING AND MOULDING COMPOSITIONS

(30) Priorité: 15.12.2006 FR 0611049
(43) Date de publication de la demande: 23.09.2009
(73) Titulaire: A ET A - Mäder, 59800 Lille (FR)
(72) Inventeur: ROUSSEL, Joël, 60610 Lacroix Saint Ouen (FR)
(74) Mandataire: Cochonneau, Olivier
(86) Numéro de dépôt international: PCT/EP2007/010717
(87) Numéro de publication internationale: WO 2008/071360

(56) Documents cités:
- EP-A- 0 549 923
- DE-A1- 19 542 564
- GB-A- 1 203 599
- GB-A- 1 522 659
- US-A- 4 224 206
- US-A- 4 902 771
- DATABASE WPI Week 198926 Derwent Publications Ltd., London, GB; AN 1989-189520 XP002438671 -& JP 01 129013 A (NITTO DENKO CORP) 22 mai 1989 (1989-05-22)

## Description

L'invention concerne une composition de résine de polyester insaturé modifiée imide cycloaliphatique insaturé, un procédé de préparation et son utilisation dans des compositions réticulables de revêtements de protection, et en particulier dans les applications électrotechniques, ou dans des compositions de moulage.

Dans les applications de compositions de revêtements de protection, par exemple dans le domaine électrotechnique ou des compositions de moulage, des performances particulières améliorées sont de plus en plus recherchées en fonction de l'utilisation finale. D'autre part, des restrictions de plus en plus strictes sont imposées en ce qui concerne les composés organiques volatils (COV) présents dans ces compositions, ou en ce qui concerne les émissions dans l'atmosphère dans les conditions particulières d'application (par exemple à l'imprégnation d'un substrat et lors de la formation du film par gélification d'une composition réticulable). Des diluants réactifs sont de plus en plus utilisés à la place de diluants non réactifs. Malgré certaines améliorations dans ce domaine, des progrès significatifs restent encore à faire, en particulier sur ces émissions COV et leur caractère nocif et/ou irritant à température ambiante, mais surtout à des températures de travail et d'utilisation significativement plus élevées, où entre autre une question de dégradation thermique sur une longue durée se pose. Donc, en plus du choix des diluants réactifs, se pose surtout la question du choix de la structure de la résine pour permettre une tenue significativement améliorée à hautes températures pour des pièces exposées à des températures de travail ou d'utilisation élevées pouvant aller jusqu'à 200°C en continu. Un compromis complexe de performances est souvent nécessaire dans la mesure où les effets résultant du choix de paramètres de structure sont interdépendants.

Des compositions de polyesters insaturés modifiés imides sont déjà décrites de manière générale dans l'état de l'art.

DE 19813315 décrit des compositions à base de résines polyesters modifiés par tétrahydrophtalimide (THP-imide) en solution dans un monomère acrylique comme le dipropylène glycol diacrylate ou le styrène, pour l'imprégnation de matériels électriques.

DE 19542564 décrit comme produit d'imprégnation une composition contenant une résine polyester modifiée THP-imide et un diluant réactif de type diallyl phtalate. Les systèmes obtenus sont très visqueux à température ambiante et ne permettent l'imprégnation de pièces qu'après préchauffage à des températures élevées d'application.

FR 2 295 051 décrit un procédé de fabrication de résines polyesters insaturés durcissables modifiés THP-imide, stables à la chaleur et utilisables en particulier dans l'industrie électrique. Le polyester insaturé modifié THP-imide est à base d'un composant polyol qui comprend un polyol trivalent à base de cycle isocyanurate. La résine est diluée dans du styrène.

DE 4140738 décrit une composition thermodurcissable pour isolation de matériel électrique à base d'une composition de polyester insaturé modifié par une imide mixte (THP / trimellitique) avec comme composant polyol un mélange de néopentyl glycol et de polyéthylène glycol et comme composant acide, l'anhydride maléique, le diluant réactif étant le styrène.

Dans les documents cités ci-dessus, aucune présence d'acide itaconique n'est explicitement décrite dans la composition citée de résine polyester insaturé modifié imide.

Parmi les inconvénients de l'état de l'art précédemment cité, on peut citer entre autres les suivants :
- viscosité de la composition relativement élevée, nécessitant des taux élevés de diluants réactifs aggravant les problèmes d'irritations et d'odeurs liés aux COV, et les émissions correspondantes,
- composition nécessitant des températures élevées de préchauffage des pièces avant imprégnation afin d'assurer une meilleure pénétration dans les moindres recoins et espaces des bobines rigides,
- tenue thermique, et en particulier stabilité thermique en terme de dégradation thermique insuffisante, pour éviter des pertes en poids et des émissions de COV à température d'utilisation relativement élevées,
- caractère irritant et nocif lié à ces émissions, et
- chute des performances mécaniques sur une longue durée d'utilisation à haute température, comme conséquence de la tenue thermique insuffisante.

Face à ce problème, la présente invention propose comme solution, une composition spécifique qui remédie à ces inconvénients. Il s'agit d'une composition spécifique de résine polyester insaturé, libre de tout solvant non réactif, de composition spécifique en composant acide (présence d'acide ou anhydride itaconique et d'anhydride cycloaliphatique) et en polyol (absence de structure alkoxylée) et comportant des groupements imides cycloaliphatiques éthyléniquement insaturés, dérivés dudit anhydride cycloaliphatique.

Il a été découvert dans cette invention, que l'emploi d'acide itaconique dans des proportions spécifiques permet de réduire la viscosité des résines, et en conséquence permet de réduire la quantité du diluant réactif B), afin de maintenir une viscosité donnée. L'ensemble de cette composition permet d'obtenir une stabilité thermique élevée, et une limitation des pertes en poids, par décomposition thermique aux températures élevées d'utilisation, et garantit une bonne stabilité des propriétés mécaniques dans le temps.

Parmi les avantages essentiels de la présente invention par rapport à l'état de l'art cité, on peut citer les avantages suivants :
- faible émission de COV,
- pouvoir liant élevé à température de travail permettant une meilleure rigidité de l'ensemble des composants du système imprégné,
- réactivité chimique élevée, permettant un cycle d'étuvage court,
- viscosité réduite avec flexibilité d'adaptation (ajustement) en fonction de l'application, par la nature et la proportion du diluant réactif B),
- stabilité thermique élevée permettant des températures de travail en continu jusqu'à 200°C, plus particulièrement stabilité thermique élévée indépendante des conditions d'atmosphère du test (oxydante ou inerte)
- excellente stabilité au stockage permettant, en particulier pour les vernis monocomposants, une imprégnation au trempé à pression atmosphérique ou sous vide, avec ou sans pression.

Le premier objet de l'invention est donc une composition spécifique de résine polyester insaturé modifié par des groupements imide cycloaliphatique éthyléniquement insaturée. Plus spécifiquement, cette composition comprend, en plus, au moins un diluant réactif spécifique.

Fait aussi partie de l'invention un procédé de préparation de ladite composition de résine.

Un autre objet de l'invention concerne une composition réticulable comprenant au moins une composition de résine telle que définie selon l'invention.

L'invention concerne aussi l'utilisation de ladite composition de résine ou de ladite composition réticulable la contenant, dans des revêtements, en particulier des revêtements de protection et/ou d'isolation électrique ou dans des mastics ou dans des compositions de moulage (pour composites SMC / BMC ou stratifiés) ou dans l'imprégnation de surfaces.

L'invention couvre aussi une méthode (procédé) d'application desdites compositions réticulables, de revêtements ou d'imprégnation, en spécifiant le mode d'application desdites compositions, par imprégnation.

Enfin, font aussi partie de la présente invention les articles ou objets finis résultant de l'utilisation d'au moins une composition de résine ou d'au moins une composition réticulable selon l'invention dans lesdites applications spécifiques.

Ainsi, le premier objet de la présente invention concerne une composition de résine polyester insaturé, exempte (libre) de tout solvant non réactif, qui comprend :
A) au moins un polyester insaturé obtenu à partir de :
   A1) un composant acide comprenant au moins un anhydride cycloaliphatique éthyléniquement insaturé et au moins 5% en mol d'acide et/ou d'anhydride itaconique, et
   A2) un composant polyol comprenant au moins une amine primaire hydroxylée, choisie parmi une monohydroxylée et/ou une dihydroxylée, et au moins un polyol branché,
et avec,
- ledit polyester insaturé A) comportant au moins une fonction imide cycloaliphatique éthyléniquement insaturée, dérivée dudit anhydride cycloaliphatique insaturé,
- ledit composant polyol A2) étant exempt de toute structure alkoxylée, et
- les proportions, et fonctionnalité moyenne des composants A1 et A2 étant sélectionnées afin d'éviter toute gélification par réticulation, en particulier en respectant pour cela la relation de Macosko-Miller (Macromolécules, vol. 9, 1976, p. 199-211).

Une telle composition de résine inclut dans sa couverture la composition de résine de polyester A) à l'état solide (en masse), avant toute dilution avec un diluant réactif.

Plus particulièrement, ladite composition de résine est sous forme diluée et dans ce cas, elle comprend en plus :
B) au moins un diluant réactif, monomère et/ou oligomère comportant au moins une insaturation éthylénique, de préférence au moins 2, et plus préférentiellement de 2 à 4 insaturations éthyléniques, copolymérisables avec l'insaturation éthylénique dudit polyester insaturé A), et avec ledit diluant B) étant exempt de toute structure alkoxylée, et
C) en option, au moins un polyester saturé, c'est à dire un polyester à squelette saturé, liquide à température ambiante, portant au moins une insaturation terminale (méth)acrylique, avec de préférence de 2 à 6 insaturations (fonctions) terminales (méth)acryliques ayant de préférence une fonctionnalité allant de 2 à 6.

Ledit composant C) est liquide (fluide) à température ambiante en l'absence de comonomére diluant réactif, et son taux peut varier de 0 à 50%, et de préférence de 5 à 30% en poids par rapport au poids total de A) + B) + C). Le polyester saturé à insaturations terminales (méth)acryliques C) peut être préparé par (méth)acrylation de fonctions hydroxy terminales d'un polyester polyol saturé (squelette ou chaîne saturée) de fonctionnalité en hydroxy allant de préférence de 2 à 6. La masse moléculaire Mn de ce polyester peut varier de 300 à 1500. Comme exemples convenables de composant C), on peut citer les produits CN 2505 (f = 4), CN 2560 (f = 4), CN 2881, CN 2555 (f = 4) ou CN 293 (f = 6) de Cray Valley.

Ce polyester C) permet de diminuer la quantité de composant B) dans la composition, ainsi que d'augmenter sensiblement les valeurs des pouvoirs liants, tout en réduisant le taux de COV. Le taux de polyester C) ne dépasse pas 50% pour éviter la détérioration de la tenue thermique du revêtement final. De préférence, quand le polyester C) est présent, le rapport en poids A)/C) est supérieur à 1 ou égal à 1, et plus préférentiellement supérieur à 1.

Donc, selon ce mode de réalisation plus particulier, ladite composition de résine est exempte (libre) de tout solvant non réactif et comprend :
A) au moins un polyester insaturé obtenu à partir de :
   A1) un composant acide comprenant au moins un anhydride cycloaliphatique éthyléniquement insaturé et au moins 5% en mol d'acide et/ou d'anhydride itaconique, et
   A2) un composant polyol comprenant au moins une amine primaire hydroxylée, choisie parmi une monohydroxylée et/ou une dihydroxylée, et au moins un polyol branché, et
B) au moins un diluant réactif, monomère et/ou oligomère comportant au moins une insaturation éthylénique, de préférence au moins 2, et plus préférentiellement de 2 à 4 insaturations éthyléniques, copolymérisables avec l'insaturation dudit polyester insaturé A),
et avec,
- ledit polyester insaturé A) comportant au moins une fonction imide cycloaliphatique éthyléniquement insaturée, dérivée dudit anhydride cycloaliphatique insaturé,
- lesdits composants polyol A2) et diluant B) étant exempts de toute structure alkoxylée, et
- les proportions et fonctionnalité moyenne des composants A1) et A2) étant sélectionnées afin d'éviter toute gélification par réticulation, en particulier en respectant pour cela la relation de Macosko-Miller.

Le terme « solvant non réactif », employé pour cette composition de résine, signifie qu'il est non réactif avec les autres composants de la composition, et en particulier avec ledit polyester insaturé A).

Le terme « acide itaconique » employé par la suite sera à considérer comme signifiant « acide et/ou anhydride itaconique », sauf indication contraire.

La relation de Macosko-Miller est bien connue de l'homme du métier. En particulier, le respect de la relation de Macosko-Miller (en dessous du seuil de gélification) sera nécessaire dans le cas où la fonctionnalité du polyol branché est supérieure à 2.

La présence de toute structure alkoxylée (même d'une unité alkoxy, type éthoxy et/ou propoxy, telle que connue par l'homme du métier) est impérativement exclue du diluant réactif monomère et/ou oligomère B) et du composant polyol A2).

Ledit anhydride cycloaliphatique éthyléniquement insaturé de préférence porte ladite insaturation en position différente d'une insaturation α,β-éthylénique, ce qui signifie que cette insaturation se situe de préférence hors du cycle anhydride, et donc dans un autre cycle lié à celui de l'anhydride.

Les anhydrides préférés sont: l'anhydride tétrahydrophtalique (THP) et l'anhydride nadique, lequel anhydride nadique résulte d'une condensation Diels-Alder entre le dicyclopentadiène (DCPD) et l'anhydride maléique. Encore plus convenable et préféré, est l'anhydride tetrahydrophtalique (THP).

Selon un mode de réalisation préféré de la présente invention, ladite insaturation dudit diluant réactif, monomère et/ou oligomère B), est choisie parmi l'insaturation (méth)acrylique et/ou allylique et/ou vinylique.

Selon un mode de réalisation encore plus particulier et préféré, ladite composition de résine est exempte de monomère vinyl aromatique, et plus particulièrement de styrène aussi bien dans le composant B) que dans les autres composants possibles de la composition. Plus préférentiellement, tout diluant réactif présent dans ladite composition, qu'il soit dans le composant B), et éventuellement dans les autres composants potentiels de la composition de résine, porte une fonctionnalité exclusivement méthacrylique, ladite fonctionnalité pouvant aller de 2 à 4.

La réduction des émissions COV dans l'atmosphère des ateliers d'application est un problème plus particulier de la présente invention, par exemple lors d'un procédé d'imprégnation pour revêtements de protection ou pour composites à base de fibres de verre. En effet, entre autres applications, la composition de la présente invention est destinée à l'utilisation pour l'imprégnation au four des matériels électriques. Il a été découvert que l'utilisation de diluants réactifs portant une fonctionnalité exclusivement méthacrylique, permet de résoudre de manière encore améliorée le problème des émissions COV et de l'irritabilité liée, en réduisant considérablement les émissions de COV dans le procédé de mise en oeuvre. En effet, l'emploi de monomères et/ou oligomères de fonctionnalité exclusivement méthacryloylique (dite aussi méthacrylique par la suite) comme diluants réactifs B) à la place de monomères acryloyliques, comme par exemple l'hexanediol diacrylate et le dipropylène glycol diacrylate, parmi d'autres, permet d'abaisser considérablement les pertes par évaporation lors de la cuisson. Ils présentent en outre l'avantage d'être beaucoup moins irritants que leurs homologues acryloyliques (dits aussi acryliques par la suite), ce qui les rend plus aisément manipulables en atelier. Donc, une insaturation exclusivement méthacrylique pour le diluant réactif, monomère et/ou oligomère B), est particulièrement préférée. Dans ce cas, cela signifie l'absence dans ladite composition de monomères tels que : styrène, vinyltoluène, diallyl phtalate (DAP), ou diluants réactifs à fonction acryloylique (acrylique).

Dans ce cas, la composition de ladite résine a l'avantage d'être significativement moins irritante dans les conditions d'utilisation pour certaines applications spécifiques. Dans ce contexte, la composition de résine est exempte de tout composé susceptible d'émissions fortement irritantes pour l'utilisateur. Les diluants réactifs, monomères B) préférés, sont sélectionnés parmi le butanediol-1,4-diméthacrylate, l'hexanediol diméthacrylate, l'isobornyl méthacrylate, le méthacrylate de dicyclopentadiènyle ou le méthacrylate de dicyclopentadiènyle éthanol.

Ledit diluant réactif, monomère et/ou oligomère B), peut aussi être choisi parmi les époxy méthacrylates. Comme exemple d'époxy méthacrylate, on peut citer le diméthacrylate de Bisphénol A, commercialisé sous le nom CN 151 de Cray Valley. Lesdits époxy méthacrylates sont utilisés comme diluants réactifs B), de préférence en mélange avec au moins un autre diluant réactif B) sélectionné parmi les monomères préférés cités ci-haut : le butanediol-1,4-diméthacrylate, l'hexanediol diméthacrylate, l'isobomyl méthacrylate, le méthacrylate de dicyclopentadiènyle ou le méthacrylate de dicyclopentadiènyle éthanol.

Le taux en poids dudit diluant réactif, monomère et/ou oligomère B), par rapport au poids total du polyester A) et du diluant réactif, monomère et/ou oligomère B), peut varier de 10 à 75% et de préférence de 30 à 65%.

Concernant le taux global desdits groupements imides cycloaliphatiques insaturées dans ledit polyester insaturé A), il peut varier de 2 à 6, et de préférence de 2 à 4 mol par kg de polyester insaturé A) non dilué (en matière solide).

Plus particulièrement, ledit polyester insaturé A) est obtenu en deux étapes, une première étape comportant la préparation en milieu solvant aromatique d'un condensat monoalcool-imide cycloaliphatique insaturée et/ou d'un condensat diol-imide cycloaliphatique insaturée, par réaction dudit anhydride cycloaliphatique éthyléniquement insaturé, avec ladite amine primaire hydroxylée, avec optionnellement l'élimination dudit solvant, la première étape étant suivie d'une deuxième étape d'addition du reste des composants de A1) et de A2) et de réaction avec ledit condensat, pour former ledit polyester insaturé A).

Ladite amine primaire hydroxylée peut être une amine primaire hydroxylée selon la formule générale suivante :

(OH)ₙ-R₁-NH₂,

avec : R₁ étant un alkylène en C₂ à C₆, et n variant de 1 à 2.

Cette amine primaire hydroxylée peut être choisie parmi les amines primaires monohydroxylées suivantes : éthanol-amine, propanol-amine, butanol-amine et isomères ou homologues supérieurs jusqu'à C₆.

Ladite amine primaire hydroxylée peut aussi être un mélange d'amine primaire monohydroxylée, avec une amine primaire dihydroxylée, comme définie selon la formule générale ci-haut avec n = 2.

Ladite fonction imide cycloaliphatique éthyléniquement insaturée peut être exclusivement terminale (en bout de chaîne), s'il y a présence exclusive d'une amine primaire monohydroxylée où elle peut être à la fois terminale et pendante (groupement imide pendant) s'il y a à la fois présence d'une amine primaire monohydroxylée et d'une amine primaire dihydroxylée, l'amine primaire monohydroxylée conduisant à un condensat intermédiaire monoalcool-imide et l'amine primaire dihydroxylée conduisant à un condensat intermédiaire diol-imide correspondant, qui s'incorporent respectivement en bout de chaîne ou en position pendante dans la chaîne polyester insaturé A).

Concernant la préparation dudit polyester insaturé A) selon l'invention, l'acide itaconique peut représenter un taux molaire allant de 5 à 45% dudit composant acide A1), tel que défini ci-haut. A plus de 45% en mol d'acide itaconique par rapport au composant A1), apparaissent des problèmes de stabilité (gélification) de la résine pendant le stockage à température ambiante.

Selon une préférence particulière, ledit composant acide A1) peut comprendre un mélange d'acide itaconique et d'anhydride maléique. Dans ce cas, le rapport molaire acide itaconique par rapport audit mélange peut varier de 10 à 90%, et de préférence de 20 à 80% du mélange, ce qui correspond de 5 à 45%, et de préférence de 10 à 40% du composant A1).

Le polyol branché tel que défini dans ledit composant polyol A2) est sélectionné de préférence parmi le néopentyl glycol (NPG), le butyl-2-éthyl-2-propane diol-1,3 (BEPD), le méthyl-2-propanediol-1,3 (MPDiol), le pentaérythritol (PE) et ses dérivés ester-diols ou triols, le triméthylolpropane (TMP) et ses dérivés ester-diols, le triméthyloléthane (TME) et ses dérivés ester-diols, ou la glycérine et ses dérivés ester-diols. Ledit polyol branché peut représenter au moins 15%, et de préférence de 25 à 50% en mol dudit composant polyol A2).

Le composant polyol A2) ne doit pas contenir de polyol alkoxylé, quel que soit son degré d'alkoxylation, y compris par exemple le propylène glycol (PG à 1 unité propoxy), l'éthylène glycol (EG à 1 unité éthoxy), le diéthylène glycol (DEG à 2 unités éthoxy). La présence de polyol branché permet de limiter la flexibilité de la résine polyester insaturé A). La composition réticulable résultante est alors caractérisée par des pouvoirs liants élevés, et plus particulièrement supérieurs à 147 N (15 kgf) à 20°C (selon la méthode Helical Coil ASTM-D 2519).

Le polyester insaturé A) peut avoir une masse moléculaire en nombre Mn allant de 500 à 1500 exprimée en équivalent polystyrène, telle que mesurée par GPC avec comme éluant le THF.

La viscosité correspondante de la composition de résine selon l'invention peut varier de 300 à 3000 mPa.s, et de préférence de 300 à 2000 mPa.s à 25°C, pour un taux de dilution de 50% dans un diluant réactif B), tel que défini selon l'invention.

Un autre objet de la présente invention concerne un procédé de préparation de ladite composition de résine selon l'invention, lequel procédé comprend les étapes suivantes :
i) préparation d'au moins un polyester insaturé A), comportant au moins une fonction imide d'anhydride cycloaliphatique éthyléniquement insaturée, à partir de :
   A1) un composant acide comprenant au moins un anhydride cycloaliphatique éthyléniquement insaturé et au moins 5% en mol d'acide et/ou d'anhydride itaconique, et
   A2) un composant polyol comprenant au moins un polyol branché et au moins une amine primaire hydroxylée, choisie parmi les amines monohydroxylées et/ou les amines dihydroxylées, et
ii) addition au polyester insaturé A) obtenu à l'étape i) d'au moins un diluant réactif B), monomère et/ou oligomère comportant au moins une insaturation éthylénique.

L'étape i) de préparation dudit polyester insaturé A) comprend en particulier, les étapes suivantes :
- préparation en milieu solvant aromatique d'un condensat hydroxylé, mono- et/ou di-hydroxylé, imide cycloaliphatique insaturée, par réaction préalable dudit anhydride cycloaliphatique éthyléniquement insaturé avec ladite amine primaire hydroxylée, mono-et/ou di-hydroxylée,
- optionnellement, élimination dudit solvant, avant
- addition du reste des composants, du composant acide A1) et du composant polyol A2) et réaction avec ledit condensat imide hydroxylée, jusqu'à obtention dudit polyester insaturé A), comportant ladite fonction imide cycloaliphatique éthyléniquement insaturée.

Comme solvant aromatique, on peut choisir le xylène ou le toluène, le xylène étant préféré.

La réaction de préparation de l'imide cycloaliphatique éthyléniquement insaturée se fait en deux étapes : une première étape de réaction de condensation pour former l'acide amique correspondant, par réaction d'une première fonction amine sur l'anhydride correspondant, avec ouverture de cet anhydride à une plage de températures allant de 85 à moins de 100°C, et de préférence 85 à 95°C, suivie d'une deuxième étape de réaction de cyclisation à une température supérieure allant de 140 à 160°C, et de préférence de 145 à 155°C, jusqu'à un indice d'acide inférieur à 5 mg KOH/g.

La préparation de la résine polyester insaturé A), à partir du monoalcool et/ou diol imide cycloaliphatique éthyléniquement insaturé et du reste de composants, du composant acide A1) et du composant polyol A2) est obtenue par réaction de polycondensation, soit en masse à l'état fondu, soit en azéotropie (présence d'un solvant, formant un azéotrope avec l'eau), avec élimination de l'eau formée (sous vide pour l'état fondu ou par azéotropie), à une température de réaction pouvant aller de 150 à 180°C par azéotropie, et de 200 à 220°C à l'état fondu, selon des conditions bien connues par l'homme du métier. Dans le cas de la présente invention, la voie azéotrope est préférée pour les deux étapes (imide hydroxylée et polyester), dans la mesure où, le fait de travailler à des températures plus basses, permet des performances finales moins affectées par la température. La dilution avec le diluant réactif (composant B)) permet d'ajuster la viscosité de la composition de résine en fonction de l'application visée.

Le rapport entre les fonctions -OH du composant polyol A2) et les fonctions -COOH du composant acide A1) se situe de préférence entre 0,9 et 1,1, et plus particulièrement, il est proche de la stoechiométrie, c'est à dire entre 0,95 et 1,05, en l'absence de polyol branché de fonctionnalité supérieure à 2. Si cette fonctionnalité est supérieure à 2, la relation de Macosko-Miller s'applique pour le contrôle des proportions et des fonctionnalités moyennes afin d'éviter toute gélification, prévisible par cette relation.

Selon une première option de ce procédé, ladite amine primaire est monohydroxylée, ce qui conduit à une structure imide cycloaliphatique éthyléniquement insaturée téléchélique, avec la fonction terminale en bout de chaîne, et selon une deuxième option il s'agit d'un mélange d'amines monohydroxylées et dihydroxylées, ce qui conduit à une structure imide pendante dans la chaîne polyester insaturé.

Un autre objet de la présente invention est une composition réticulable pour application, qui comprend au moins une composition de résine telle que définie selon l'invention.

Cette composition réticulable peut comprendre en plus, au moins un amorceur radicalaire sélectionné parmi les dérivés de type peroxyde, éventuellement en présence d'un accélérateur de décomposition, tels qu'un sel de cobalt ou de manganèse ou une amine tertiaire, ou parmi les azoalkanes, tel que l'AIBN, les disulfures, les tétraphényléthanes et dérivés, tels que les benzopinacol et benzopinacolate contenant des liaisons C-C thermolabiles, les systèmes redox permettant de travailler à basse température (peroxyde ou hydroperoxyde en présence d'un réducteur type sel de cobalt ou de manganèse ou une amine tertiaire), et les photoamorceurs (pour réticulation sous UV). L'amorceur peut aussi être un macroamorceur contenant des motifs de type tétraphényléthane.

La teneur en poids dudit amorceur peut aller jusqu'à 5% par rapport au total de la composition, et de préférence de 0,5 à 3%. Elle peut comprendre, en plus, un inhibiteur de polymérisation, sélectionné parmi les inhibiteurs phénoliques, tels que l'hydroquinone, le méthylhydroquinone. La teneur en poids de cet inhibiteur de polymérisation peut aller jusqu'à 0,5%, et de préférence de 0,01 à 0,1% en poids par rapport au poids total de la composition.

La composition réticulable peut être réticulée par voie de rayonnement, tel que le rayonnement UV en présence d'au moins un photoamorceur ou le faisceau d'électrons (EB) sans amorceur, ou par voie thermique telle que la réticulation en présence de peroxyde ou hydroperoxyde (P-cure), éventuellement en présence d'un accélérateur (système redox pour basse température, et plus particulièrement à l'ambiante, avec ledit accélérateur ou réducteur pouvant être une amine tertiaire ou des sels de cobalt ou de manganèse), ou par exposition à la chaleur (élévation de température) ou en présence d'amorceurs thermiques tels que tétraphényléthanes et dérivés (par scission thermique d'une liaison C-C). L'utilisation d'une composition photoréticulable (UV) convient plus particulièrement pour la protection de circuits imprimés, de puces électroniques, l'étanchéité de relais, l'assemblage de haut-parleurs. La voie thermique convient plus particulièrement pour les applications destinées à l'imprégnation de matériels électriques (transformateurs, moteurs, rotors, stators, etc). Il peut s'agir d'une composition de revêtement de protection et/ou d'isolation électrique, ou d'une composition de mastic d'étanchéité, ou de réparation/finition de pièces (par exemple pour automobile), ou d'une composition de moulage pour pièces moulées ou pour composites ou stratifiés, tels que SMC ou BMC ou de compositions d'imprégnation de substrats comme les compositions de vernis d'imprégnation, et plus particulièrement les vernis d'imprégnation monocomposants (prêts-à-l'emploi).

La présence de fonctions imides cycloaliphatiques éthyléniquement insaturées en bout de chaîne de la résine polyester insaturé A), et l'absence de tout diluant réactif de type acryloylique (acrylique) à base d'alcools alkoxylés dans le composant B), quel que soit le degré d'alkoxylation, apportent une amélioration significative de la tenue thermique et de la stabilité des propriétés mécaniques sur une longue durée.

Dans ce contexte, ladite composition réticulable peut comprendre en plus, un deuxième liant co-réactif avec ladite composition de résine polyester insaturé A). Ce deuxième liant est de préférence éthyléniquement insaturé et peut porter une deuxième fonction réactive qui peut être une fonction époxy, comme dans le cas des résines éthyléniquement insaturées époxydées, ou une fonction hydroxy, comme dans le cas des résines vinyl esters, telles que le diméthacrylate de Bisphénol A.

La présente invention couvre aussi l'utilisation de la composition de résine polyester insaturé ou de la composition réticulable la contenant telle que définie ci-dessus selon l'invention, dans les revêtements tels que revêtements de protection et/ou d'isolation électrique, ou dans les mastics, ou dans les compositions de moulage (pour pièces moulées, composites SMC ou BMC ou stratifiés), ou dans l'imprégnation de surfaces ou substrats.

Parmi les revêtements de protection et/ou d'isolation électrique, on peut citer les vernis tels que les vernis d'imprégnation monocomposants (prêts-à-l'emploi) ou bicomposants composés d'une première partie contenant l'amorceur radicalaire (peroxyde) et une deuxième partie contenant l'accélérateur à base de sels métalliques.

Plus particulièrement, cette utilisation est destinée aux revêtements de protection dans le domaine de l'électrotechnique, pour pièces électriques/électroniques (matériel électrique et électronique) et/ou à l'isolation électrique de pièces électriques telles que les moteurs électriques (stators et rotors), les transformateurs, les circuits intégrés, les induits de démarreurs, les alternateurs, les systèmes électriques tournants ou fixes, tels que les tableaux électriques. Une utilisation plus particulière concerne l'imprégnation de matériel électrique de classe H (moteurs électriques), de tenue à 180°C ou de classe supérieure.

Fait aussi partie de l'invention, un procédé d'application d'au moins une composition de revêtement, tel que revêtement (en particulier vernis) de protection et/ou d'isolation électriques ou composition d'imprégnation, selon l'invention, lequel procédé comprend au moins une étape d'application de ladite composition par imprégnation, à chaud (étuvée) ou au trempé roulé ou au trempé sous pression atmosphérique et sous vide avec ou sans pression ou au goutte à goutte. Plus particulièrement, font partie de l'invention l'utilisation dans les revêtements de protection et/ou d'isolation électrique qui sont des vernis d'imprégnation, ou étuvés à chaud, ou au trempé roulé, ou au trempé, ou au goutte à goutte. L'imprégnation spéciale sous-vide avec pression est utilisée pour les moteurs électriques moyenne et haute tension afin d'imprégner les rubans mica poreux qui forment l'isolation principale de ce type de machine tournante.

Les substrats concernés par les revêtements de protection et/ou d'isolation électrique sont des substrats sélectionnés parmi le métal, le plastique, le bois, le carton, le verre, en particulier les fibres de verre qui peuvent être revêtues par enduction, avec réticulation préférée par exposition UV et/ou par système d'amorceur type peroxyde. Un cas plus particulier d'utilisation concerne le revêtement de pièces, de haute tenue thermique pouvant aller jusqu'à 230°C, telles que les pièces sous capot de voiture.

Un autre objet de l'invention concerne les objets et articles finis résultant de l'utilisation de la composition de résine ou de la composition réticulable la contenant telle que définie ci-dessus selon la présente invention, dans les diverses applications citées ci-haut. Il s'agit de revêtements de protection et/ou d'isolation électrique, tels que vernis ou gels coats (pigmentés ou non pigmentés) ou barrier coats, ou bien il s'agit de pièces moulées ou de composites type SMC ou BMC ou stratifiés, ou de mastics par exemple d'étanchéité ou de réparation et finition de pièces.

D'autres articles finis concernés sont les pièces électriques/électroniques revêtues par au moins une couche de revêtement de protection et/ou d'isolation électrique, revêtement tel que défini ci-haut selon la présente invention.

Les exemples décrits ci-dessous ne limitent pas l'étendue de la couverture, mais sont donnés uniquement à titre d'illustration de la présente invention.

### I) Résines et caractéristiques

### 1) Préparation d'une résine Polyester insaturé de type A), portant des fonctions terminales tétrahydrophtalimides (selon l'invention)

La synthèse comporte deux étapes distinctes :
Etape i) : Préparation du condensat monoalcool avec une fonction tétrahydrophtalimide :
   Dans un montage de synthèse classique pour réaliser la synthèse de la résine polyester, on introduit 27 parties d'anhydride tétrahydrophtalique (fournisseur Lonza) et 18 parties de xylène (fournisseur Total). On élève ensuite la température du milieu réactionnel à 90°C. On additionne ensuite progressivement 11 parties de monoéthanolamine (fournisseur Dow), tout en maintenant la température en dessous de 100°C. Le réacteur est ensuite chauffé rapidement jusqu'à 150°C. Cette température est maintenue jusqu'à attente du critère d'arrêt de la synthèse, à savoir un indice d'acide inférieur à 5 mg KOH/g.
Etape ii) : Préparation du polyester insaturé :
   A 120°C, 9 parties de néopentyl glycol (fournisseur Perstorp), 12 parties d'acide itaconique (fournisseur Rhodia), 9 parties d'anhydride maléique (fournisseur Condea) et 0,4 partie d'octoate d'étain (fournisseur Borchers) sont chargées. Le réacteur est ensuite chauffé à 170°C. Lorsque l'indice d'acide est à 40 mg KOH/g, le xylène est distillé sous vide jusqu'à ce que l'indice d'acide soit compris entre 25 et 35 mg KOH/g. Le réacteur est ensuite refroidi à 140°C. On additionne ensuite 0,02 partie de méthyl hydroquinone (MHQ) (fournisseur Eastman), puis le batch est refroidi à 80°C.

A cette température, la résine polyesterimide est diluée lentement avec 32 parties de butanediol-1,4-diméthacrylate (fournisseur Cray Valley). La résine est refroidie, filtrée, puis stockée.

Après refroidissement à l'ambiante, on obtient une résine diluée de couleur ambrée aux caractéristiques présentées au tableau 1, ci-dessous.

**Tableau 1**

| Caractéristique | Méthode | Résultat |
|---|---|---|
| Viscosité à 20°C en mPa.s | ISO 2114 | 1000 - 2000 |
| Indice d'acide en mg KOH/g | AFNOR XP T51-213 | 25-35 |

Après réticulation (avec 2% en poids de peroxyde de ditertioamyle, Luperox DTA® fourni par Arkema) et moulage sous forme de plaque de résine pure polymérisée (cuisson de 1 heure à 100°C) suivie d'une post-cuisson de 1 heure à 150°C, les propriétés thermiques, selon une analyse thermogravimétrique (ATG) effectuée en programmation de température à 10°C / min de 25 à 800°C sous atmosphère d'azote ou d'oxygène, sont présentées au tableau 2 ci-après.

**Tableau 2**

| Température de début de dégradation (°C) | Température ONSET de dégradation (°C) |
|---|---|
| 220 | 390 |

Ce produit est thermiquement stable jusqu'à 220°C, la température ONSET de dégradation (température au point d'inflexion de la courbe perte en poids par rapport à la température) est de 390°C (dans les conditions d'analyse) sous atmosphère inerte d'azote ou sous atmosphère d'oxygène. Ceci démontre que la stabilité thermique reste indépendante de la composition de l'atmosphère du test.

### 2) Préparation d'une résine polyester insaturé de type B) (comparatif)

Il s'agit d'une résine polyester insaturé, non modifié imide et dilué dans le styrène (extrait sec de 65%), fournie par Cray Valley sous le nom commercial de MC3. Ce type de résine est bien connu pour son utilisation en protection et isolation électrique dans le domaine électrotechnique. Elle sert de référence de comparaison générale.

### Caractéristiques : .

| | |
|---|---|
| Viscosité : | 9.2 dPa.s à 20°C |
| Indice d'acide : | 27 mg KOH/g |

### II) Vernis d'imprégnation et caractéristiques

### 1) Vernis A' (selon l'invention)

A partir de la résine polyester A) dont la préparation est décrite ci-dessus (voir § I) 1)), une composition réticulable au four (appelée vernis d'imprégnation) est préparée, comme décrit ci-dessous.

Dans une cuve, on mélange à température ambiante, 91,8 parties de la résine polyester insaturé A) décrite ci-haut (dans son diluant réactif), 0,08 partie de méthylhydroquinone (inhibiteur) fourni par Eastman, 1,5 parties d'amorceur radicalaire à base de benzopinacolate fourni par Lanxess et 5,4 parties (partie supplémentaire de diluant réactif, pour ajustement) de butanediol-1,4-diméthacrylate (BDDMA-1,4) fourni par Cray Valley. On mélange pendant 30 minutes, avant de filtrer et de conditionner.

### Propriétés physiques du vernis A' obtenu :

| | |
|---|---|
| Densité : | 1,10 |
| Viscosité coupe AFNOR 4 à 25°C (secondes) : | 75 - 95 |
| Point éclair (°C) : | > 110 |
| Temps de gélification à 100°C (minutes) : | 2,5 - 20 |
| Pertes en poids | |
| (sur 10 grammes de produit, à 150°C pendant 1 heure), en % : | < 3,5 |

### Propriétés mécaniques :

Pouvoir liant selon la méthode Helical Coil ASTM-D 2519
Essais effectués sur fil MW35-bobinage étuvé à 160°C pendant 5 heures

| | |
|---|---|
| Mesure à 20°C : | > 147 N (> 1 5 kgf) à la rupture |
| Mesure à 120°C : | 30 N |

### 2) Vernis B' (comparatif)

Il est à base de la résine B), décrite ci-dessus. Il s'agit d'un vernis bicomposant dont la 1^{ère} partie contient 65% de résine B), 3% de perbenzoate de tertiobutyle, le reste étant du styrène, et la 2^{éme} partie contient 65% de résine B), 1,5% d'une solution de sel de cobalt comme accélérateur de décomposition, le reste étant du styrène. En fait, la viscosité de chacune de deux parties est ajustée par additions successives de styrène jusqu'à compléter à 100% en poids.

### Propriétés physiques du vernis B' obtenu :

| | |
|---|---|
| Densité : | 1,10 |
| Viscosité coupe AFNOR 4 à 25°C (secondes) : | 75 - 95 |
| Point éclair (°C) : | 32 |
| Temps de gélification à 100°C (minutes) : | 2,5 - 6 |
| Pertes en poids | |
| (sur 10 grammes de produit, à 150°C pendant 1 heure), en % : | > 10 |

### Propriétés mécaniques :

Pouvoir liant selon la méthode Helical Coil ASTM-D 2519
Essais effectués sur fil MW35-bobinage étuvé à 160°C pendant 5 heures
Mesure à 20°C : > 147 N (> 15 kgf) à la rupture

### III) Tenue thermique

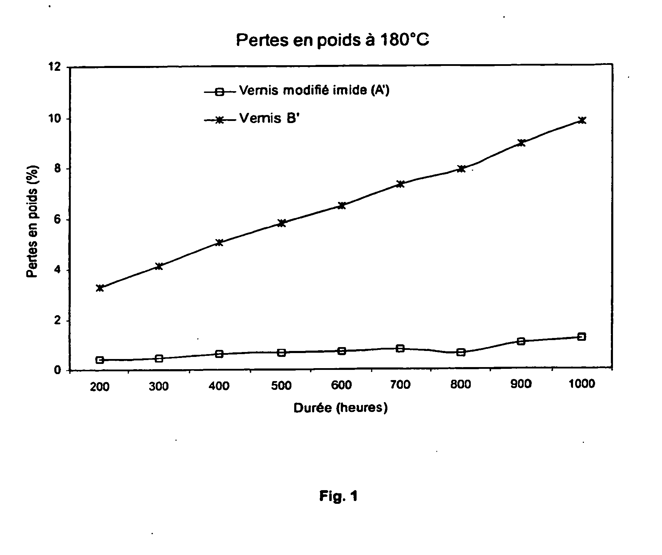

Comparaison des vernis A' et B' en termes de perte de poids (voir Fig. 1).
Rappel de deux vernis comparés :
- Vernis A' : préparé à partir de la résine de polyester A) (selon l'invention), et selon le mode opératoire décrit au § I) 1),
- Vernis B' : préparé à partir de la résine polyester B) (comparatif).

Les pertes de poids mesurées après 1000 heures à 180°C sur la composition de vernis réticulable A' selon l'invention, préalablement durcie, indiquent une perte en poids du vernis selon l'invention de l'ordre de 1% contre 10 à 25% pour le vernis comparatif, à base de résine B) non modifiée imide et diluée dans le styrène.

Les analyses thermogravimétriques (ATG) comparées, effectuées sur des résines polyesters de composition identique à la résine A), selon l'invention et diluées à taux en poids identique (extrait sec de 65%), respectivement dans l'hexanediol diacrylate (HDDA) et dipropylèneglycol diacrylate (DPGDA), fournis par Cray Valley, démontrent la meilleure performance à haute température des compositions à base de diluants réactifs qui sont des monomères méthacryloyliques (voir tableau 3 ci-dessous).

**Tableau 3**

| Diluant réactif B) pour polyester A) | Température de début de dégradation (°C) | Température ONSET de dégradation (°C) |
|---|---|---|
| BDDMA-1,4 | 220 | 390 |
| HDDA | 200 | 357 |
| DPGDA | 190 | 336 |

Ces résultats sont obtenus après réticulation (avec 2% en poids de peroxyde de ditertioamyle, Luperox DTA, fourni par Arkema) et moulage sous forme de plaque de résine pure polymérisée (cuisson pendant 1 heure à 100°C), suivie d'une post-cuisson de 1 heure à 150°C. Les propriétés thermiques sont obtenues selon une analyse thermogravimétrique (ATG) effectuée en programmation de température à 10°C/min de 25 à 800°C sous atmosphère d'azote.

### IV) Influence de la composition du composant acide A1)

Afin de mettre en évidence le rôle de l'acide itaconique, nous avons fait varier la quantité d'acide itaconique introduite lors de la fabrication de la résine de type A) (voir § I) 1)). Deux nouvelles résines polyester ont ainsi été préparées selon le procédé précédemment décrit et diluées dans le butanediol diméthacrylate. Le rapport résine polyester / (résine polyester + diluant réactif) est dans tous les cas fixé à 65%.

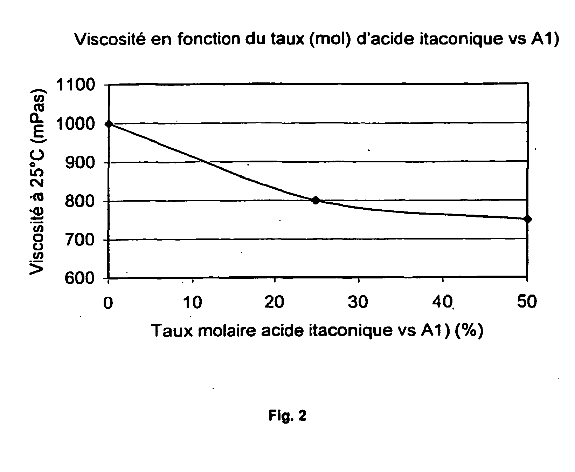

Ces deux résines sont caractérisées par le taux molaire en acide itaconique (rapport entre le nombre de moles acide itaconique / (nombre de moles acide itaconique + anhydride maléique)), de 0% (substitution de l'acide itaconique par l'anhydride maléique) à 100% (substitution de l'anhydride maléique par l'acide itaconique). Les résultats comparatifs sur ces trois résines sont présentés à la Fig. 2.

La conclusion de ces résultats est que l'emploi d'acide itaconique permet de réduire la viscosité de la résine correspondante, et en conséquence permet d'utiliser moins de diluant réactif pour la même viscosité visée de la composition de résine ou des diluants présentant des pouvoirs solvants (effet solvatant) plus faibles que les diluants courants de type acryloylique (ou acrylique), lesdits solvants plus faibles étant tels que les diluants réactifs à base de monomères de type méthacryloylique (ou méthacrylique). A priori, il permettrait de limiter les réactions secondaires de saturation des doubles liaisons par les hydroxyles (réaction dite d'Ordelt).

Les résines polyesters ont toutes été préparées selon le procédé précédemment décrit (cf. § I) 1)) et diluées dans le butanediol-1,4-diméthacrylate (BDDMA-1,4). Le rapport résine polyester /(résine polyester + diluant réactif) est de 65% (35% de diluant réactif B = BDDMA-1,4).

Le taux molaire d'acide itaconique tel que présenté à la Fig. 2 correspond au rapport en % mol d'acide itaconique sur total du composant acide A1 (nombre total = anhydride THP + itaconique + maléique).

### V) Influence de la composition du composant polyol A2)

L'absence de polyol alkoxylé permet d'accroître la tenue thermique des résines et des compositions résultantes. Ainsi, la substitution du néopentyl glycol (NPG) par du propylène glycol (PG) dans la résine A dégrade les propriétés thermiques, comme montré ci-dessous, dans le tableau 4.

**Tableau 4**

| Composition du composant polyol A2) | Température ONSET de dégradation (°C) |
|---|---|
| 100% NPG | 390 |
| 70% NPG /30% PG | 360 |
| 30% NPG /70% PG | 354 |

Ces résultats sont obtenus après réticulation sous forme de plaque de résine pure polymérisée (cuisson pendant 1 heure à 100°C, comme décrit ci-dessus), suivie d'une post-cuisson de 1 heure à 150°C.

L'analyse thermogravimétrique (ATG) a été effectuée en programmation de température à 10°C/min de 25 à 800°C sous atmosphère d'azote.

### VI) Composition en présence d'un composant C) tel que défini selon l'invention

A partir de la résine polyester A) dont la préparation est décrite ci-dessus (cf. § I) 1)), une composition réticulable au four (appelée vernis d'imprégnation) est préparée, comme décrit ci-dessous.

Dans une cuve, on mélange à température ambiante, 49 parties de la résine polyester insaturé A) décrite ci-dessus, préalablement diluée dans 26 parties de 1,4-butanediol diméthacrylate comme composant B) (fournisseur Cray Valley), 25 parties de CN 2505 comme composant C) (fournisseur Cray Valley), 0,08 partie de méthylhydroquinone (inhibiteur) (fournisseur Eastman), 1,5 parties d'amorceur radicalaire à base de benzopinacolate (fournisseur Lanxess) et 3,2 parties (partie supplémentaire de diluant réactif B), pour ajustement) de butanediol-1.4-diméthacrylate (BDDMA-1,4). On mélange pendant 30 minutes, avant de filtrer et de conditionner.

### Propriétés physiques du vernis obtenu (selon l'invention) :

| | |
|---|---|
| Densité : | 1,10 |
| Viscosité coupe AFNOR 4 à 25°C (secondes) : | 200 |
| Point éclair (°C) : | > 110 |
| Temps de gélification à 100°C (minutes) : | 4'10 |
| Pertes en poids | |
| (sur 10 grammes de produit, à 150°C pendant 1 heure) en % : | < 3,5 |

### Propriétés mécaniques :

Pouvoir liant selon la méthode Helical Coil ASTM-D 2519
Essais effectués sur fil MW35-bobinage étuvé à 160°C pendant 5 heures

| | |
|---|---|
| Mesure à 20°C : | > 147 N (> 15 kgf) à la rupture |

## Revendications

1. Composition de résine polyester insaturé, exempte de tout solvant non réactif, **caractérisée en ce qu'**elle comprend :
A) au moins un polyester insaturé obtenu à partir de :
A1) un composant acide comprenant au moins un anhydride cycloaliphatique éthyléniquement insaturé et au moins 5% en mol d'acide et/ou d'anhydride itaconique, et
A2) un composant polyol comprenant au moins une amine primaire hydroxylée, choisie parmi une amine primaire monohydroxylée et/ou une amine primaire dihydroxylée, et au moins un polyol branché,
et avec,
- ledit polyester insaturé A) comportant au moins une fonction imide cycloaliphatique éthyléniquement insaturée, dérivée dudit anhydride cycloaliphatique insaturé,
- ledit composant polyol A2) étant exempt de toute structure alkoxylée, et
- les proportions et la fonctionnalité moyenne des composants A1) et A2) étant sélectionnées afin d'éviter toute gélification par réticulation.

2. Composition selon la revendication 1, **caractérisée en ce que** ledit anhydride cycloaliphatique est sélectionné parmi l'anhydride tétrahydrophtalique ou l'anhydride nadique.

3. Composition de résine selon l'une des revendications 1 ou 2, **caractérisée en ce qu'**elle comprend en plus :
B) au moins un diluant réactif, monomère et/ou oligomère, comportant au moins une insaturation éthylénique, copolymérisable avec l'insaturation éthylénique dudit polyester insaturé A), et avec ledit diluant B) étant exempt de toute structure alkoxylée, et
C) en option, au moins un polyester saturé, liquide à température ambiante, portant au moins une insaturation terminale (méth)acrylique, de préférence de 2 à 6 insaturations terminales (méth)acryliques.

4. Composition selon la revendication 3, **caractérisée en ce que** ladite insaturation dudit monomère et/ou oligomère B) est choisie parmi l'insaturation (méth)acrylique et/ou allylique et/ou vinylique.

5. Composition selon l'une des revendications 3 à 4, **caractérisée en ce que** ledit monomère et/ou oligomère B) a une fonctionnalité exclusivement méthacrylique.

6. Composition selon l'une des revendications 3 à 5, **caractérisée en ce que** ledit monomère B) est sélectionné parmi le butanediol-1,4-diméthacrylate, l'hexanediol diméthacrylate, l'isobornyl méthacrylate, le méthacrylate de dicyclopentadiènyle ou le méthacrylate de dicyclopentadiènyle éthanol.

7. Composition selon l'une des revendications 3 à 6, **caractérisée en ce que** le taux en poids dudit monomère et/ou oligomère B), par rapport au poids total du polyester A) et du monomère et/ou oligomère B), varie de 10 à 75%.

8. Composition selon l'une des revendications 1 à 7, **caractérisée en ce que** le taux global desdits groupements imides cycloaliphatiques insaturées dans ledit polyester insaturé A) varie de 2 à 6 mol par kg de polyester insaturé A), non dilué.

9. Composition selon l'une des revendications 1 à 8, **caractérisée en ce que** ladite amine primaire hydroxylée est une amine primaire hydroxylée selon la formule générale suivante :
(OH)ₙ-R₁-NH₂,
avec : R₁ étant un alkylène, en C₂ à C₆, et n variant de 1 à 2-.

10. Composition selon la revendication 9, **caractérisée en ce que** ladite amine primaire est monohydroxylée et choisie parmi : éthanol-amine, propanol-amine, butanol-amine et isomères ou homologues supérieurs jusqu'à C₆.

11. Composition selon l'une des revendications 1 à 10, **caractérisée en ce que** ladite amine primaire hydroxylée est un mélange d'amine primaire monohydroxylée telle que définie selon l'une des revendications 9 ou 10, avec une amine primaire dihydroxylée, telle que définie selon la revendication 9, pour n = 2.

12. Composition selon l'une des revendications 1 à 11, **caractérisée en ce que** l'acide itaconique représente un taux molaire de 5 à 45% dudit composant acide A1).

13. Composition selon l'une des revendications 1 à 12, **caractérisée en ce que** lé composant acide A1) comprend un mélange d'acide itaconique et d'anhydride maléique.

14. Composition selon l'une des revendications 1 à 13, **caractérisée en ce que** ledit polyol branché représente au moins 15% en mol dudit composant polyol A2).

15. Procédé de préparation d'une composition de résine, telle que définie selon l'une des revendications 1 à 14, **caractérisé en ce qu'**il comprend les étapes suivantes :
i) préparation d'au moins un polyester insaturé A), comportant au moins une fonction imide d'anhydride cycloaliphatique éthyléniquement insaturé, à partir de :
A1) un composant acide comprenant au moins un anhydride cycloaliphatique éthyléniquement insaturé et au moins 5% en mol d'acide et/ou d'anhydride itaconique, et
A2) un composant polyol comprenant au moins un polyol branché et au moins une amine primaire hydroxylée, choisie parmi une amine primaire monohydroxylée et/ou une amine primaire dihydroxylée, et
ii) addition au polyester insaturé A), obtenu à l'étape i), d'au moins un diluant réactif B), monomère et/ou oligomère comportant au moins une insaturation éthylénique.

16. Procédé selon la revendication 15, **caractérisé en ce que** ladite préparation de polyester insaturé A) comprend les étapes suivantes :
- préparation en milieu solvant aromatique d'un condensat hydroxylé, mono- et/ou dihydroxylé, imide cycloatiphatique insaturée, par réaction préalable dudit anhydride cycloaliphatique éthyléniquement insaturé avec ladite amine primaire hydroxylée, mono- et/ou di-hydroxylée,
- optionnellement, élimination dudit solvant, avant
- addition du reste des composants, du composant acide A1) et du composant polyol A2) et réaction avec ledit condensat imide hydroxylé, jusqu'à obtention dudit polyester insaturé A), comportant ladite fonction imide cycloaliphatique éthyléniquement insaturée.

17. Composition réticulable **caractérisée en ce qu'**elle comprend au moins une composition de résine telle que définie selon l'une des revendications 1 à 14 ou telle que préparée par le procédé tel que défini selon l'une des revendications 15 ou 16.

18. Composition réticulable selon la revendication 17, **caractérisée en ce qu'**elle comprend en plus, au moins un amorceur radicalaire sélectionné parmi les dérivés de type peroxyde, éventuellement en présence d'un accélérateur de décomposition, ou parmi les azoalkanes, les disulfures, les tétraphényléthanes et dérivés, les systèmes redox, et les photoamorceurs.

19. Composition selon l'une des revendications 17 ou 18, **caractérisée en ce qu'**elle est réticulable sous rayonnement ou par voie thermique ou par voie redox à température ambiante.

20. Composition selon l'une des revendications 17 à 19, **caractérisée en ce que** ladite composition est une composition de revêtement de protection et/ou d'isolation électrique ou une composition de mastic d'étanchéité ou une composition de moulage pour pièces moulées ou pour composites ou stratifiés ou une composition d'imprégnation de substrats ».

21. Composition selon l'une des revendications 17 à 20, **caractérisée en ce que** ladite composition comprend en plus un deuxième liant, lequel est co-réactif avec ladite composition de résine polyester insaturé A).

22. Composition selon la revendication 21, **caractérisée en ce que** ledit deuxième liant est éthyléniquement insaturé et porte une deuxième fonction réactive sélectionnée parmi époxy ou hydroxy.

23. Utilisation de la composition de résine polyester insaturé selon l'une des revendications 1 à 14 ou préparée par le procédé tel que défini selon l'une des revendications 15 ou 16, dans les revêtements ou les mastics ou les compositions de moulage ou l'imprégnation de surfaces ou substrats.

24. Utilisation dans les revêtements selon la revendication 23, **caractérisée en ce qu'**il s'agit de revêtements de protection et/ou d'isolation électrique choisis parmi : vernis, gel coats, barrier coats.

25. Utilisation selon la revendication 23 ou 24, **caractérisée en ce qu'**elle est destinée aux revêtements de protection et/ou d'isolation électrique de pièces électriques ou de pièces choisies parmi les moteurs électriques, transformateurs, circuits intégrés, induits de démarreurs, alternateurs, systèmes électriques tournants ou fixes.

26. Utilisation selon l'une des revendications 23 à 25, caractérisée en qu'elle concerne le revêtement de pièces, pour haute tenue thermique à des températures allant jusqu'à 230°C.

27. Procédé d'application d'au moins une composition de revêtement ou d'imprégnation, telle que définie selon la revendication 20, **caractérisé en ce qu'**il comprend au moins une étape d'application de ladite composition par imprégnation, à chaud, au trempé roulé, au trempé ou au goutte à goutte.

28. Revêtements de protection et/ou d'isolation électrique ou pièces moulées ou composites ou stratifiés ou joints de mastics, **caractérisés en ce qu'**ils sont obtenus à partir de la composition de résine telle que définie selon l'une des revendications 1 à 14 ou préparée selon le procédé tel que défini selon l'une des revendications 15 ou 16 ou à partir d'une composition réticulable telle que définie selon l'une des revendications 17 à 22.

29. Pièces électriques ou électroniques **caractérisées en ce qu'**elles sont revêtues par au moins une couche de revêtement tel que défini selon la revendication 28.

## Claims

1. Unsaturated polyester resin composition, free from any nonreactive solvant, **characterized in that** it comprises:
A) at least one unsaturated polyester obtained from:
A1) an acid component comprising at least one ethylenically unsaturated cycloaliphatic anhydride and at least 5 mol% of itaconic acid and/or anhydride; and
A2) a Polyol component comprising at least one hydroxylated primary amine, chosen from a monohydroxylated primary amine and/or a dihydroxylated primary amine, and at least one branched polyol;
and with:
- said unsaturated polyester A) comprising at least one ethylenically unsaturated cycloaliphatic imide functional group, derived from said unsaturated cycloaliphatic anhydride;
- said polyol component A2) being free from any alkoxylated structure; and
- the proportions and the average functionality of the components A1) and A2) being selected in order to avoid any gelling by crosslinking.

2. Composition according to claim 1, **characterized in that** said cycloaliphatic anhydride is chosen from tetrahydrophthalic anhydride or nadic anhydride.

3. Resin composition according to one of claims 1 or 2, **characterized in that** it further comprises:
B) at least one monomeric and/or oligomeric reactive diluent comprising at least one ethylenic unsaturation, copolymerizable with the ethylenic unsaturation of said unsaturated polyester A), and with said diluent B) being free from any alkoxylated structure; and
C) optionally, at least one saturated polyester, liquide at room temperature, bearing at least one, preferably 2 to 6, terminal (meth)acrylic unsaturations.

4. Composition according to claim 3, **characterized in that** said unsaturation of said monomer and/or oligomer B) is chosen from (meth)acrylic and/or allyl and/or vinyl unsaturation.

5. Composition according to one of claims 3 to 4, **characterized in that** said monomer and/or oligomer B) has an exclusively methacrylic functionality.

6. Composition according to one of claim 3 to 5, **characterized in that** said monomer B) is chosen from 1,4-butanediol dimethacrylate, hexanediol dimethacrylate, isobornyl methacrylate, dicyclopentadienyl methacrylate or dicyclopentadienyl ethanol methacrylate.

7. Composition according to one of claims 3 to 6, **characterized in that** the weight ratio of said monomer and/or oligomer B), with respect to the total weight of the polyester A) and the monomer and/or oligomer B), varies from its to 75%.

8. Composition according to one of claims 1 to 7, **characterized in that** the overall amount of said unsaturated cycloaliphatic imide groups in said unsaturated polyester A) varies from 2 to 6 mol per kg of undiluted, unsaturated polyester A).

9. Composition according to one of claims 1 to 8, **characterized in that** said hydroxylated primary amine is a hydroxylated primary amine according to the following general formula:
(OH)ₙ-R₁-NH₂,
with: R₁ being a C₂ to C₆ alkylene, and n varying from 1 to 2.

10. Composition according to claims 9, **characterized in that** said primary amine is monohydroxylated and chosen from: ethanolamine, propanolamine, butanolamine and isomers or higher homologues up to C₆.

11. Composition according to one of claims 1 to 11, **characterized in that** said hydroxylated primary amine is a mixture of monohydroxylated primary amine such as defined according to one of claims 9 or 10, with a dihydroxylated primary amine, such as defined according to claim 9, for n = 2.

12. Composition according to one of claims 1 to 11, **characterized in that** itaconic acid represents an amount of 5 to 45 mol% of said acid component A1).

13. Composition according to one of claims 1 to 12, **characterized in that** the acid component A1) comprises a mixture of itaconic acid and maleic anhydride.

14. Composition according to one of claims 1 to 13, **characterized in that** said branched Polyol represents at least 15 mol% of said Polyol component A2).

15. Process for preparing a resin composition, such as defined according to one of claims 1 to 14, **characterized in that** it comprises the following steps:
i) preparation of at least one unsaturated polyester A), comprising at least one ethylenically unsaturated cycloaliphatic anhydride imide functional group, from:
A1) an acid component comprising at least one ethylenically unsaturated cycloaliphatic anhydride and at least 5 mol% of itaconic acid and/or anhydride; and
A2) a polyol component comprising at least one branched polyol and at least one hydroxylated primary amine, chosen from a monohydroxylated primary amine and/or a dihydroxylated primary amine; and
ii) addition to the unsaturated polyester A), obtained in step i), of at least one monomeric and/or oligomeric reactive diluent B) comprising at least one ethylenic unsaturation.

16. Process according to Claim 15, **characterized in that** said preparation of unsaturated polyester A) comprises the following steps:
- preparation, in an aromatic solvent medium, of a hydroxylated, monohydroxylated and/or dihydroxylated, unsaturated cycloaliphatic imide condensate, by prior reaction of said ethylenically unsaturated cycloaliphatic anhydride with said hydroxylated, monohydroxylated and/or dihydroxylated, primary amine;
- optionally, removal of said solvant, before the
- addition of the remainder of the components of the acid component A1) and of polyol component A2) and reaction with said hydroxylated imide condensate until obtention of said unsaturated polyester A), comprising said ethylenically unsaturated cycloaliphatic imide functional group.

17. Crosslinkable composition **characterized in that** it comprises at least one resin composition such as defined according to one of claims 1 to 14, or such as prepared by the process such as defined according to one of claims 15 or 16.

18. Crosslinkable composition according to claim 17, **characterized in that** it comprises, in addition, at least one radical initiator selected from peroxide-type derivatives, optionally in the presence of a decomposition accelerator, or from azoalkanes, disulphides, tetraphenylethanes and derivatives, redox systems and photoinitiators.

19. Composition according to one of claims 17 or 18, **characterized in that** it is crosslinkable by radiation or thermally or by a redox route at room temperature.

20. Composition according to one of claims 17 to 19, **characterized in that** said composition is a protective and/or electrically-insulating coating composition or a mastic seal composition or a moulding composition for moulded pieces or for composites or laminates or a composition for impregnating substrates.

21. Composition according to one of claims 17 to 20 **characterized in that** said composition comprises, in addition, a second binder, which is coreactive with said unsaturated polyester resin composition A).

22. Composition according to claim 21, **characterized in that** said second binder is ethylenically unsaturated and bears a second reactive functional group chosen from an epoxy oar hydroxy functional group.

23. Use of the unsaturated polyester resin composition according to one of claims 1 to 14 or prepared by the process such as defined according to one of claims 15 or 16, in coatings or mastics or moulding compositions or for impregnating surfaces or substrates.

24. Use in coatings according to claim 23, **characterized in that** these are protective and/or electrically-insulating coatings chosen from: varnishes, gel coats or barrier coats.

25. Use according to claim 23 or 24, **characterized in that** it is intended for protective and/or electrically-insulating coatings for electrical pieces or for pieces selected from electric motors, transformers, integrated circuits, starter armatures, alternators, rotating or stationary electrical systems.

26. Use according to one of claims 23 to 25, **characterized in that** it relates to the coating of parts for high thermal resistance at temperatures ranging up to 230°C.

27. Process for applying at least one coating or impregnating composition such as defined according to claim 20, **characterized in that** it comprises at least one step of applying said composition by impregnating, by stoving, by roll coating, by dip coating or dropwise.

28. Protective and/or electrically-insulating coatings or moulded pieces or composites or laminates or mastic seals, **characterized in that** they are obtained from the resin composition such as defined according to one of claims 1 to 14 or prepared according to the process such as defined according to one of claims 15 or 16 or from a crosslinkable composition such as defined according to one of claims 17 to 22.

29. Electrical or electronic pieces **characterized in that** they are coated by at least one coating slayer such as defined according to claim 28.

## Patentansprüche

1. Zusammensetzung aus ungesättigtem Polyesterharz, die frei von jedwedem nicht-reaktiven Lösungsmittel ist, **dadurch gekennzeichnet, daß** sie umfaßt:
A) wenigstens einen ungesättigten Polyester, der erhalten wird aus:
A1) einem Säurebestandteil, der wenigstens ein ethylenisch ungesättigtes cycloaliphatisches Anhydrid und wenigstens 5 Mol-% Itaconsäure und/oder -anhydrid umfaßt, und
A2) einem Polyolbestandteil, der wenigstens ein hydroxyliertes primäres Amin, ausgewählt aus einem monohydroxylierten primären Amin und/oder einem dihydroxylierten primären Amin, sowie wenigstens ein verzweigtes Polyol umfaßt,
und wobei
- der ungesättigte Polyester A) wenigstens eine ethylenisch ungesättigte cycloaliphatische Imidfunktion, die von dem ungesättigten cycloaliphatischen Anhydrid abgeleitet ist, umfaßt,
- der Polyolbestandteil A2) frei von jedweder alkoxylierten Struktur ist und
- die Anteile und die durchschnittliche Funktionalität der Bestandteile A1) und A2) gewählt sind, um jegliche Gelierung durch Vernetzen zu verhindern.

2. Zusammensetzung nach Anspruch 1, **dadurch gekennzeichnet, daß** das cycloaliphatische Anhydrid aus Tetrahydrophthalanhydrid oder Nadicanhydrid ausgewählt ist.

3. Harzzusammensetzung nach einem der Ansprüche 1 oder 2, **dadurch gekennzeichnet, daß** sie zudem umfaßt:
B) wenigstens ein monomeres und/oder oligomeres reaktives Verdünnungsmittel, das wenigstens eine ethylenische Unsättigung umfaßt, die mit der ethylen tischen Unsättigung des ungesättigten Polyesters A) copolymerisierbar ist, und wobei das Verdünnungsmittel B) frei von jedweder alkoxylierten Struktur ist, sowie
C) optional wenigstens einen gesättigten, bei Raumtemperatur flüssigen Polyester, der wenigstens eine endständige (meth)acrylische Unsättigung, vorzugsweise 2 bis 6 endständige (meth)acrylische Unsättigungen trägt.

4. Zusammensetzung nach Anspruch 3, **dadurch gekennzeichnet, daß** die Unsättigung des Monomers und/oder Oligomers B) aus der (meth)acrylischen und/oder allylischen und/oder vinylischen Unsättigung ausgewählt ist.

5. Zusammensetzung nach einem der Ansprüche 3 bis 4, **dadurch gekennzeichnet, daß** das Monomer und/oder Oligomer B) eine ausschließlich methacrylische Funktionalität hat.

6. Zusammensetzung nach einem der Ansprüche 3 bis 5, **dadurch gekennzeichnet, daß** das Monomer B) aus Butandiol-1,4-dimethacrylat, Hexandioldimethacrylat, Isobornylmethacrylat, Dicyclopentadienyl-Methacrylat oder Dicyclopentadienyl-ethanol-Methacrylat ausgewählt ist.

7. Zusammensetzung nach einem der Ansprüche 3 bis 6, **dadurch gekennzeichnet, daß** der Gewichtsprozentsatz des Monomers und/oder Oligomers B) bezogen auf das Gesamtgewicht des Polyesters A) und des Monomers und/oder Oligomers B) zwischen 10 und 75 % variiert.

8. Zusammensetzung nach einem der Ansprüche 1 bis 7, **dadurch gekennzeichnet, daß** der Gesamtgehalt der ungesättigten cycloaliphatischen Imidgruppen in dem ungesättigten Polyester A) zwischen 2 und 6 Mol pro kg unverdünntem, ungesättigtem Polyester A) variiert.

9. Zusammensetzung nach einem der Ansprüche 1 bis 8, **dadurch gekennzeichnet, daß** das hydroxylierte primäre Amin ein hydroxylierte primäres Amin nach folgender allgemeiner Formel ist: (OH)ₙ-R₁-NH₂, wobei R₁ ein C₂- bis C₆-Alkylen ist und n von 1 bis 2 variiert.

10. Zusammensetzung nach Anspruch 9, **dadurch gekennzeichnet, daß** das primäre Amin monohydroxyliert und ausgewählt ist aus: Ethanolamin, Propanolamin, Butanolamin und Isomeren oder höheren Homologen bis C₆.

11. Zusammensetzung nach einem der Ansprüche 1 bis 10, **dadurch gekennzeichnet, daß** das hydroxylierte primäre Amin ein Gemisch ist aus monohydroxyliertem primärem Amin, wie es nach einem der Ansprüche 9 oder 10 definiert ist, und einem dihydroxylierten primären Amin, wie es nach Anspruch 9 definiert ist, für n = 2.

12. Zusammensetzung nach einem der Ansprüche 1 bis 11, **dadurch gekennzeichnet, daß** die Itaconsäure einen Molanteil von 5 bis 45 % des Säurebestandteils A1) ausmacht.

13. Zusammensetzung nach einem der Ansprüche 1 bis 12, **dadurch gekennzeichnet, daß** der Säurebestandteil A1) ein Gemisch aus Itaconsäure und aus Maleinanhydrid umfaßt.

14. Zusammensetzung nach einem der Ansprüche 1 bis 13, **dadurch gekennzeichnet, daß** das verzweigte Polyol wenigstens 15 Mol-% des Polyolbestandteils A2) ausmacht.

15. Verfahren zur Herstellung einer Harzzusammensetzung, wie sie nach einem der Ansprüche 1 bis 14 definiert ist, **dadurch gekennzeichnet, daß** es die folgenden Schritte umfaßt:
i) Herstellen wenigstens eines ungesättigten Polyesters A), der wenigstens eine Imidfunktion von ethylenisch ungesättigtem cycloaliphatischem Anhydrid umfaßt, aus:
A1) einem Säurebestandteil, der wenigstens ein ethylenisch ungesättigtes cycloaliphatisches Anhydrid und wenigstens 5 Mol-% Itaconsäure und/oder -anhydrid umfaßt, und
A2) einem Polyolbestandteil, der wenigstens ein verzweigtes Polyol und wenigstens ein hydroxyliertes primäres Amin, ausgewählt aus einem monohydroxylierten primären Amin und/oder einem dihydroxylierten primären Amin, umfaßt, und
ii) Zugeben wenigstens eines monomeren und/oder oligomeren reaktiven Verdünnungsmittels B), das wenigstens eine ethylenische Unsättigung umfaßt, zu dem bei Schritt i) erhaltenen ungesättigten Polyester A).

16. Verfahren nach Anspruch 15, **dadurch gekennzeichnet, daß** die Herstellung von ungesättigtem Polyester A) die folgenden Schritte umfaßt:
- Herstellen in aromatischem Lösungsmittelmedium, eines hydroxylierte, mono- und/oder dihydroxylierten Kondensats, ungesättigtes cycloaliphatische Imid, durch vorherige Reaktion des ethylenisch ungesättigten cycloaliphatischen Anhydrids mit dem hydroxylierten, mono- und/oder dihydroxylierten primären Amin,
- optional, Entfernen des Lösungsmittels vor
- Zugabe der restlichen Bestandteile, des Säurebestandteils A1) und des Polyolbestandteils A2) sowie Reaktion mit dem hydroxylierten Imid-Kondensat bis zum Erhalt des ungesättigten Polyesters A), der die ethylenisch ungesättigte cycloaliphatische Imidfunktion umfaßt.

17. Vernetzbare Zusammensetzung, **dadurch gekennzeichnet, daß** sie wenigstens eine Harzzusammensetzung umfaßt, wie sie nach einem der Ansprüche 1 bis 14 definiert ist oder wie sie mittels des Verfahrens, wie nach einem der Ansprüche 15 oder 16 definiert, hergestellt ist.

18. Vernetzbare Zusammensetzung nach Anspruch 17, **dadurch gekennzeichnet, daß** sie zudem wenigstens einen radikalischen Initiator umfaßt, der aus den Derivaten vom Typ Peroxid, eventuell in Anwesenheit eines Zersetzungsbeschteunigers, oder aus den Azoalkanen, den Disulfiden, den Tetraphenylethanen und Derivaten, den Redoxsystemen und den Photoinitiatoren ausgewählt ist.

19. Zusammensetzung nach einem der Ansprüche 17 oder 18, **dadurch gekennzeichnet, daß** sie unter Strahlung oder auf thermischem Weg oder auf dem Redoxweg bei Raumtemperatur vernetzbar ist.

20. Zusammensetzung nach einem der Ansprüche 17 bis 19, dadurch gekennzeichet, daß die Zusammensetzung eine Beschichtungszusammensetzung zum Schutz und/oder zum elektrischen Isolieren oder eine Dichtungskittzusammensetzung oder eine Formzusammensetzung für Formteile oder für Verbundwerkstoffe oder Schichtstoffe oder eine Zusammensetzung zum Imprägnieren von Substraten ist.

21. Zusammensetzung nach einem der Ansprüche 17 bis 20, **dadurch gekennzeichnet, daß** die Zusammensetzung zudem ein zweites Bindemittel umfaßt, das mit der Zusammensetzung aus ungesättigtem Polyesterharz A) eine Coreaktion eingeht.

22. Zusammensetzung nach Anspruch 21, **dadurch gekennzeichnet, daß** das zweite Bindemittel ethylenisch ungesättigt ist und eine zweite reaktive Funktion, ausgewählt aus Epoxy- oder Hydroxyfunktion, trägt.

23. Verwendung der Zusammensetzung aus ungesättigtem Polyesterharz nach einem der Ansprüche 1 bis 14 oder hergestellt mittels des Verfahrens, wie es nach einem der Ansprüche 15 oder 16 definiert ist, in Beschichtungen oder Kitts oder Zusammensetzungen zum Formen oder Imprägnieren von Oberflächen oder Substraten.

24. Verwendung in Beschichtungen, nach Anspruch 23, **dadurch gekennzeichnet, daß** es sich um Beschichtungen zum Schutz und/oder zum elektrischen Isolieren handelt, die ausgewählt sind aus: Lacken, Gelcoats, Barrier Coats.

25. Verwendung nach Anspruch 23 oder 24, **dadurch gekennzeichnet, daß** sie für Beschichtungen zum Schutz und/oder zum elektrischen Isolieren von elektrischen Teilen oder von Teilen, die aus Elektromotoren, Transformatoren, integrierten Schaltkreisen, Ankern von Anlassern, Wechselstromgeneratoren, umlaufenden oder festen elektrischen Systemen ausgewählt sind, bestimmt ist.

26. Verwendung nach einem der Ansprüche 23 bis 25, **dadurch gekennzeichnet, daß** sie die Beschichtung von Teilen für hohe Hitzebeständigkeit bei Temperaturen von bis zu 230 °C betrifft.

27. Verfahren zum Aufbringen wenigstens einer Beschichtungs- oder lmprägnierungszuammensetzung, wie sie nach Anspruch 20 definiert ist, **dadurch gekennzeichnet, daß** es wenigstens einen Schritt zum Aufbringen der Zusammensetzung durch Imprägnieren, unter Hitze, im Rolltauchverfahren, im Tauchverfahren oder im Tropfverfahren umfaßt.

28. Beschichtungen zum Schutz und/oder zum elektrischen Isolieren oder Formteile oder Verbundwerkstoffe oder Schichtstoffe oder Kittdichtungen, **dadurch gekennzeichnet, daß** sie mittels der Harzzusammensetzung, wie sie nach einem der Ansprüche 1 bis 14 definiert ist oder nach dem Verfahren, wie nach einem der Ansprüche 15 oder 16 definiert, hergestellt ist, oder mittels einer vernetzbaren Zusammensetzung, wie sie nach einem der Ansprüche 17 bis 22 definiert ist, erhalten werden.

29. Elektrische oder elektronische Teile, **dadurch gekennzeichnet, daß** sie mit wenigstens einer Schicht einer Beschichtung, wie sie nach Anspruch 28 definiert ist, überzogen werden.
